# EUROPÄISCHE PATENTSCHRIFT

(11) **EP 1 970 608 B1**
(45) Veröffentlichungstag und Bekanntmachung des Hinweises auf die Patenterteilung: **23.09.2009**
(21) Anmeldenummer: 07004973.9
(22) Anmeldetag: 10.03.2007
(51) Int. Cl.: F16K 7/18

(54) **Drosselventil**
Choke valve
Valve d'étranglement

(43) Veröffentlichungstag der Anmeldung: 17.09.2008
(73) Patentinhaber: FESTO AG & Co. KG, 73734 Esslingen (DE)
(72) Erfinder: Giousouf, Metin, Dr.-Ing., 73732 Esslingen (DE); Rogalski, Markus, 70794 Filderstadt (DE)
(74) Vertreter: Abel, Martin

(56) Entgegenhaltungen:
- BE-A6- 1 004 094
- DE-B4- 10 230 004
- GB-A- 1 498 178
- US-A- 3 771 563

## Beschreibung

Die Erfindung betrifft ein Drosselventil, mit einer in einem Ventilgehäuse ausgebildeten Ventilkammer, in die ein Einlasskanal und ein Auslasskanal münden und in der ein Membranelement gegenüberliegend einer der Kanalmündungen angeordnet ist, an dem ein verstellbares Betätigungsglied angreift, mit dem der Abstand zwischen dem Membranelement und der zugeordneten Kanalmündung und somit der einem hindurchströmenden Fluid zur Verfügung stehende Strömungsquerschnitt einstellbar ist.

Ein derartiges Drosselventil, auch als Stromventil bezeichenbar, geht aus der DE 102 30 004 B4 hervor. Sein Membranelement verfügt über einen zentralen kolbenförmigen Abschnitt, der einen Vorsprung bildet, welcher im Rahmen einer Linearbewegung mehr oder weniger weit in die Kanalmündung eines Einlasskanals eintauchbar ist, um einen Strömungsquerschnitt variabel vorzugeben. Die Linearbewegung des Membranelementes wird durch ein an dem Membranelement befestigtes Betätigungsglied hervorgerufen, das mittels eines vorgeschalteten Drehantriebes zu einer linearen Einstellbewegung veranlasst wird. Der gesamte Ventilmechanismus ist relativ aufwändig gestaltet und daher vermutlich relativ teuer in der Herstellung. Außerdem ist es relativ schwierig, Durchflussraten in reproduzierbarer Weise einzustellen oder schnell zwischen bestimmten Durchflussraten zu wechseln.

Es ist eine Aufgabe der vorliegenden Erfindung, ein kompaktbauendes Drosselventil zu schaffen, mit dem sich unterschiedliche Durchflusswerte relativ einfach und präzise vorgeben lassen.

Zur Lösung dieser Aufgabe ist bei einem Drosselventil der eingangs genannten Art vorgesehen, dass das Membranelement als sich über die Auslasskanalmündung erstreckende, an einem rückseitigen Befestigungsabschnitt gehäusefest fixierte schwenkbare Membranklappe ausgebildet ist, und dass das Betätigungsglied ein Betätigungskeil ist, der die Membranklappe zur Einstellung deren bezüglich der Auslasskanalmündung eingenommenen Abstandes an der der Ausströmkanalmündung zugewandten Unterseite unter Ausführung einer Einstellbewegung mehr oder weniger weit unterfahren kann.

Die Membranklappe liegt der Auslasskanalmündung gegenüber und wird daher von dem über den Einlasskanal zuströmenden Fluid in Richtung der Auslasskanalmündung beaufschlagt. Der auf der Seite der Auslasskanalmündung unter die Membranklappe fahrbare Betätigungskeil wirkt dabei als Anschlag für die Membranklappe und hält diese in einem gewissen Abstand zu der Ausströmkanalmündung, sodass dem Fluid ein vorbestimmter Strömungsquerschnitt für den Übertritt in den Auslasskanal zur Verfügung steht. Durch mehr oder weniger weites Unterfahren der Membranklappe seitens des Betätigungskeils kann der vorgenannte Abstand sehr einfach variiert werden, er ist umso größer, je weiter der Betätigungskeil die Membranklappe unterfahren hat. Somit lassen sich unterschiedliche Durchflussraten mit einer sehr einfachen, zuverlässig arbeitenden Mechanik vorgeben. Über den Verlauf der als Auflager für die Membranklappe dienenden Steuerfläche des Betätigungskeils können zudem sehr einfach Drosselventile mit unterschiedlicher Kennlinie realisiert werden, wobei die Steuerfläche beispielsweise zum Erhalt einer linearen Kennlinie einen geradlinigen Schrägverlauf und zum Erhalt einer nicht linearen Kennlinie einen zumindest teilweise konkaven Verlauf aufweisen kann.

Die Membranklappe kann prinzipiell ein biegesteifes Element sein, das über ein die Schwenkbarkeit gewährleistendes Gelenk verfügt. Bevorzugt verwendet wird allerdings eine Membranklappe, die insgesamt elastisch biegbar ausgebildet ist, beispielsweise auf Grund zumindest partiell gummielastischen Eigenschaften, was eine besonders kostengünstige Herstellung ermöglicht.

Verfügt die Membranklappe über eine ausreichende Flexibilität, ist sie sogar in der Lage, sich zur Freigabe eines besonders großen Strömungsquerschnittes von dem Betätigungskeil abzuheben, wenn ein Fluid mit umgekehrter Strömungsrichtung durch den Auslasskanal hindurch in die Ventilkammer eingespeist wird. Auf diese Weise liegt eine integrierte Rückschlagfunktion vor und das Drosselventil kann als sogenanntes Drosselrückschlagventil betrieben werden.

Vorteilhafte Weiterbildungen der Erfindung gehen aus den Unteransprüchen hervor.

Der Betätigungskeil ist zweckmäßigerweise im Bereich der dem rückseitigen Befestigungsabschnitt entgegengesetzten Klappenvorderseite der Membranklappe platziert, wobei seine verjüngte Keilvorderseite dem Befestigungsabschnitt zugewandt ist. Die Einstellbewegung ist in diesem Fall entweder zu dem Befestigungsabschnitt hin oder entgegengesetzt gerichtet.

Eine besonders einfache Abstützung gegen die über die Membranklappe auf ihn ausgeübten Strömungskräfte erfährt der Betätigungskeil, wenn er mit seiner Unterseite gleitverschieblich an einer gehäusefesten Gleitlagerfläche anliegt, die insbesondere unmittelbar am Ventilgehäuse ausgebildet ist. Keilunterseite und/oder Gleitlagerfläche können bei Bedarf mit einer einen besonders geringen Reibungskoeffizienten aufweisenden Gleitschicht beschichtet sein.

Zur Führung des Betätigungskeils bei seiner Einstellbewegung kann der Betätigungskeil in mindestens einer gehäuseseitigen Führungsnut laufen. Der Grund der Führungsnut bildet dann zweckmäßigerweise gleichzeitig die Gleitlagerfläche.

Der Betätigungskeil sollte möglichst so gestaltet sein, dass er die Fluidströmung selbst nur wenig beeinflusst und kein gravierendes Strömungshindernis darstellt. In diesem Zusammenhang ist es von Vorteil, wenn der Betätigungskeil von mindestens einem Überströmkanal durchsetzt ist, der ein Hindurchströmen des zwischen den beiden Kanälen überströmenden Fluides durch ihn selbst hindurch ermöglicht. Dies lässt sich besonders einfach realisieren, indem der Betätigungskeil aus mehreren quer zur Richtung seiner Einstellbewegung mit Abstand nebeneinander angeordneten Keilkörpern aufgebaut ist, deren Zwischenräume einen oder mehrere Überströmkanäle definieren.

Besonders vorteilhaft ist eine gabelförmige Gestaltung des Betätigungskeils, wobei sich eine zweizinkige oder dreizinkige Bauform aus heutiger Sicht besonders empfiehlt. In der zweizinkigen Bauform kann ein großer Zwischenraum zwischen den den Gabelzinken entsprechenden Keilkörpern zur Verfügung gestellt werden, wobei der Abstand zwischen den Keilkörpern bevorzugt größer ist als der Durchmesser der zugeordneten Auslasskanalmündung. Erstreckt sich zwischen zwei Keilkörpern mindestens ein weiterer Keilkörper, wird der Strömungsquerschnitt zwar geringfügig verringert, man erhält jedoch eine zusätzliche Abstützung für die Membranklappe und kann dadurch ein unerwünschtes Durchbiegen derselben auf Grund der auf sie einwirkenden Fluidkräfte besonders wirksam unterbinden. Hierbei lassen sich dann besonders dünnwandige Membranklappen verwenden.

Um einem Durchbiegen entgegenzuwirken, kann die Membranklappe aber auch mit besonderen Versteifungselementen versehen sein. Enthält die Membranklappe einen aus elastisch biegbarem, vorzugsweise über gummielastische Eigenschaften bestehenden Membrankörper, können solche Versteifungselemente entweder durch eine Materialverdickung einstückig ausgebildet oder aber als separate Elemente angebracht sein.

Um insbesondere auch unter Last ein leichtgängiges Verstellen des Betätigungskeils zu ermöglichen, kann die Membranklappe, insbesondere im Bereich ihrer dem Betätigungskeil zugewandten Klappenvorderseite, eine integrale oder separat ausgebildete biegesteife Gleitleiste tragen, die auf dem Betätigungskeil reibungsarm abgleiten kann. Die Gleitleiste kann beispielsweise zylindrisch geformt sein.

Besonders einfach herstellen und installieren lässt sich eine Membranklappe, die lediglich an ihrem rückseitigen Befestigungsabschnitt mit dem Ventilgehäuse verbunden ist. Sie kann dann insbesondere als Flachbauteil ausgeführt sein, das quer zu seiner Schwenkrichtung geradlinig konturiert ist. Das über den Einlasskanal zuströmende Fluid kann dann sowohl im Bereich der Klappenvorderseite als auch an den seitlichen Randbereichen unter die Membranklappe zu der dort befindlichen Auslasskanalmündung strömen.

Bei einer alternativen Bauform der Membranklappe ist der Zwischenraum zwischen Membranklappe und Ventilgehäuse in den seitlichen Bereichen der Membranklappe verschlossen. Die Membranklappe verfügt dort jeweils über einen wie der Befestigungsabschnitt gehäusefest fixierten Wandabschnitt, der jedoch flexibel ausgebildet ist, beispielsweise dehnbar oder mit einer Faltenstruktur, um die Schwenkbewegung der Membranklappe nicht zu behindern. Der Fluidübertritt zwischen der Ventilkammer und der Unterseite der Membranklappe findet hierbei nur im Bereich der Klappenvorderseite statt.

Um den Betätigungskeil zu verstellen und zu positionieren, ist das Drosselventil zweckmäßigerweise mit einer an dem Betätigungskeil angreifenden Antriebseinrichtung ausgestattet, bei der es sich insbesondere um eine elektrische Antriebseinrichtung handelt. Bevorzugt kommt ein Linearaktuator zum Einsatz. Über besonders kompakte Abmessungen verfügt ein Piezomotor, der zudem den Vorteil hat, dass er eine nur geringe Ansteuerspannung benötigt und auch im abgeschalteten Zustand über eine ausreichend hohe Haltekraft zum Festhalten des Betätigungskeils verfügt. Außerdem lässt sich damit ein relativ großer Verstellweg realisieren.

Die Antriebseinrichtung ist zweckmäßigerweise im Bereich der Rückseite des Betätigungskeils angeordnet. Sie ist vorzugsweise zur Umgebung hin gekapselt in einer Aufnahmekammer des Ventilgehäuses untergebracht. Diese Aufnahmekammer kann unmittelbar in die Ventilkammer übergehen, sodass auch die Antriebseinrichtung von dem das Ventil durchströmenden Fluid umströmt wird.

Als Kommunikationsschnittstelle zur Signalübertragung kann am Gehäuse eine Steckvorrichtung für ein elektrisches Kabel vorhanden sein oder besteht auch die Möglichkeit, die elektrischen Zuleitungen druckdicht aus dem Ventilgehäuse herauszuführen. Besonders interessant erscheint eine Kommunikationsschnittstelle für drahtlose Signalkommunikation, beispielsweise über eine induktive Kopplung oder zur Übertragung von Funksignalen.

Ist das Drosselventil mit Positionserfassungsmitteln und/oder mit Positionsanzeigemitteln ausgestattet, lassen sich die gewünschten Durchflusswerte besonders komfortabel einstellen. Die Positionserfassungsmittel können ausgebildet sein, um die aktuelle Einstellposition des Betätigungskeils und/oder die aktuelle Schwenkposition der Membranklappe zu erfassen. Als Positionsanzeigemittel kommen insbesondere optische Anzeigemittel in Frage, beispielsweise eine unmittelbare Visualisierung mittels Zeiger und Skala oder eine elektrisch veranlasste Visualisierung mittels Leuchtanzeigemitteln.

Um insbesondere bei einem rückströmenden Fluid oder bei einer fehlerhaften Inbetriebnahme ein Überdehnen oder gar Umstülpen der Membranklappe zu verhindern, sind zweckmäßigerweise gegenüberliegend der Oberseite der Membranklappe deren Schwenkweg begrenzende Anschlagmittel vorhanden, beispielsweise in Gestalt eines oder mehrerer in die Ventilkammer ragender Gehäusevorsprünge. Einzelne kleinere Vorsprünge haben gegenüber einem massiven größeren Vorsprung den Vorteil, dass sie die Fluidströmung in der Regel weniger beeinträchtigen.

Einlasskanalmündung und Auslasskanalmündung können beliebig relativ zueinander platziert sein. In der Regel wird man entweder eine rechtwinkelige oder eine koaxiale Zuordnung wählen.

Das Ventilgehäuse kann mit einem Anschlussstutzen ausgestattet sein, über den es direkt an einem mit dem Fluid zu versorgenden fluidtechnischen Gerät installierbar ist. Beispielsweise kann das Drosselventil an den Fluidanschluss eines fluidbetätigten Arbeitszylinders angebaut werden.

Es ist jedoch auch eine Bauform möglich, bei der das Ventilgehäuse unmittelbar vom Gehäuse eines anderen fluidbetätigten Gerätes gebildet ist, beispielsweise vom Gehäuse eines Arbeitszylinders oder Steuerventils. Dadurch lassen sich besonders kompakte Abmessungen verwirklichen.

Das Drosselventil kann so ausgeführt sein, dass es den Fluidübertritt zwischen den beiden Kanälen komplett absperren kann. Soll jedoch stets ein gewisser Mindestdurchsatz gewährleistet sein, kann dem durch die Anordnung eines oder mehrerer Stopperelemente neben der Auslasskanalmündung Rechnung getragen werden, die auch bei weitest möglich herausgefahrenem Betätigungskeil einen Minimalabstand zwischen Membranklappe und Auslasskanalmündung vorgeben.

Durch das mindestens eine Stopperelement kann auch verhindert werden, dass sich die Membranklappe bei weit herausgezogenem Betätigungskeil und folglich nur geringem Abstand zu der Auslasskanalmündung auf Grund des anstehenden Fluiddruckes unerwünscht stark durchbiegt und die Anschlusskanalmündung unerwünscht verschließt.

Nachfolgend wird die Erfindung anhand der beiliegenden Zeichnung näher erläutert. Es zeigen im Einzelnen:
- Figur 1: einen Längsschnitt gemäß Schnittlinie I-I durch eine bevorzugte Ausführungsform des erfindungsgmäßen Drosselventils bei einer Einstellung für mittleren Durchfluss,
- Figur 2: das Drosselventil im Längsschnitt gemäß Schnittlinie II-II aus Figur 4 bei einer Einstellung für maximalen Durchfluss,
- Figur 3: einen Längsschnitt durch das Ventil aus Figur 1 gemäß Schnittlinie III-III,
- Figur 4: einen Längsschnitt durch das Ventil gemäß Schnittlinie IV-IV aus Figur 2,
- Figur 5: einen Längsschnitt durch das Ventil bei rückströmendem Fluid und dadurch vom Betätigungskeil abgehobener Membranklappe,
- Figur 6: eine Einzeldarstellung des bei dem in den vorgenannten Figuren abgebildeten Drosselventil eingesetzten Betätigungskeils, wobei gepunktet eine modifizierte Bauform gezeigt ist,
- Figur 7: einen Schnitt durch das Drosselventil gemäß Schnittlinie VII-VII aus Figur 2, wobei der Betätigungskeil nicht gezeigt ist,
- Figur 8: das Keilprofil einer modifizierten Bauform des Betätigungskeils,
- Figur 9: in einer der Figur 7 entsprechenden Schnittdarstellung eine modifizierte Ausgestaltung der Membranklappe, und
- Figuren 10 bis 12: weitere Ausführungsformen des Drosselventils in einer der Figur 1 entsprechenden Längsschnittdarstellung.

Das in seiner Gesamtheit mit Bezugsziffer 1 bezeichnete Drosselventil ermöglicht die variable, insbesondere stufenlose Vorgabe der Durchflussrate eines durch es hindurchströmenden Fluides. Das Fluid kann gasförmig oder flüssig sein, vorzugsweise handelt es sich um Druckluft. Auf Grund der Beeinflussung der Strömungsrate, im Folgenden auch kurz "Durchfluss" genannt, kann das Drosselventil 1 auch als Stromventil bezeichnet werden.

Das Drosselventil 1 besitzt ein Ventilgehäuse 2, das einen Gehäuseinnenraum 3 definiert, der unter anderem eine Ventilkammer 4 bildet. In die Ventilkammer 4 mündet mit einer Einlasskanalmündung 5 ein Einlasskanal 6 und mit einer Auslasskanalmündung 7 ein Auslasskanal 8. Beide Kanäle 6, 8 münden andernends jeweils zur Außenfläche des Ventilgehäuses 2 aus.

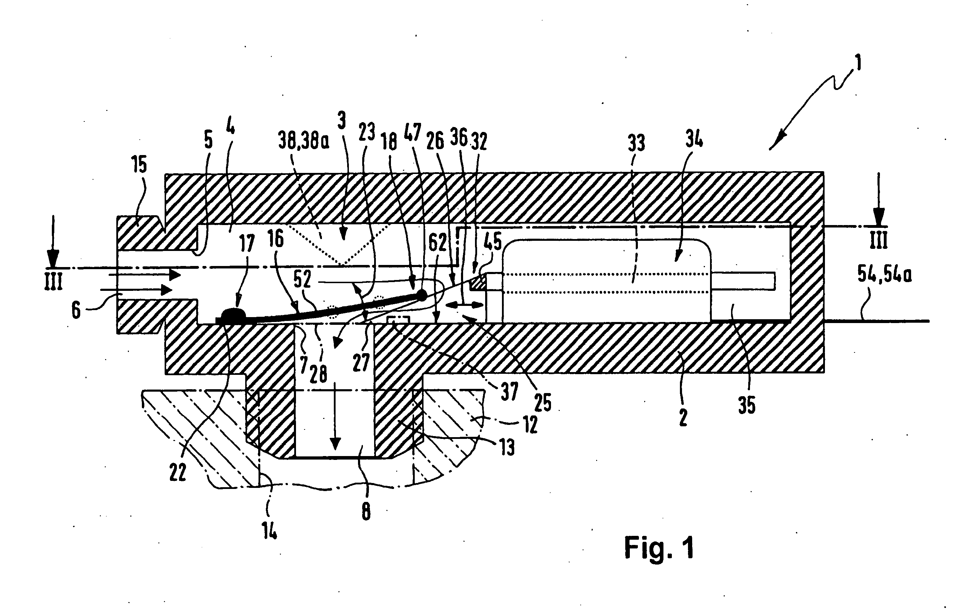

Über den Einlasskanal 6 kann von einer nicht näher gezeigten Druckquelle stammendes Fluid eingespeist werden, das das Drosselventil 1 nach Hindurchströmen durch die Ventilkammer 4 durch den Auslasskanal 8 hindurch wieder verlässt und beispielsweise einem zu betätigendem fluidtechnischen Gerät 12 zugeführt wird, das in Figur 1 strichpunktiert angedeutet ist.

Beispielhaft ist an dem Ventilgehäuse 2 ein von dem Auslasskanal 8 durchsetzter Anschlussstutzen 13 ausgebildet, über den das Drosselventil 1 im Bereich eines Fluidkanals 14 des fluidtechnischen Gerätes 12 festlegbar ist, beispielsweise durch eine Schraubverbindung. Auf diese Weise kann ein fluidtechnisches Gerät 12, beispielsweise ein fluidbetätigter Antrieb, direkt mit dem Drosselventil 1 ausgestattet werden.

Im Bereich des Einlasskanals 6 sind dem Ventilgehäuse 2 zweckmäßigerweise Anschlussmittel 15 zugeordnet, mit denen sich eine Fluidleitung lösbar anschließen lässt. Solche Anschlussmittel können prinzipiell auch dem Auslasskanal 8 zugeordnet sein.

Bei einer nicht näher dargestellten Ausführungsform ist das Ventilgehäuse 2 unmittelbar vom Gehäuse des mit dem Fluid zu versorgenden fluidtechnischen Gerätes 12 gebildet. Der Gehäuseinnenraum 3 befindet sich dann direkt im Innern des Gerätegehäuses.

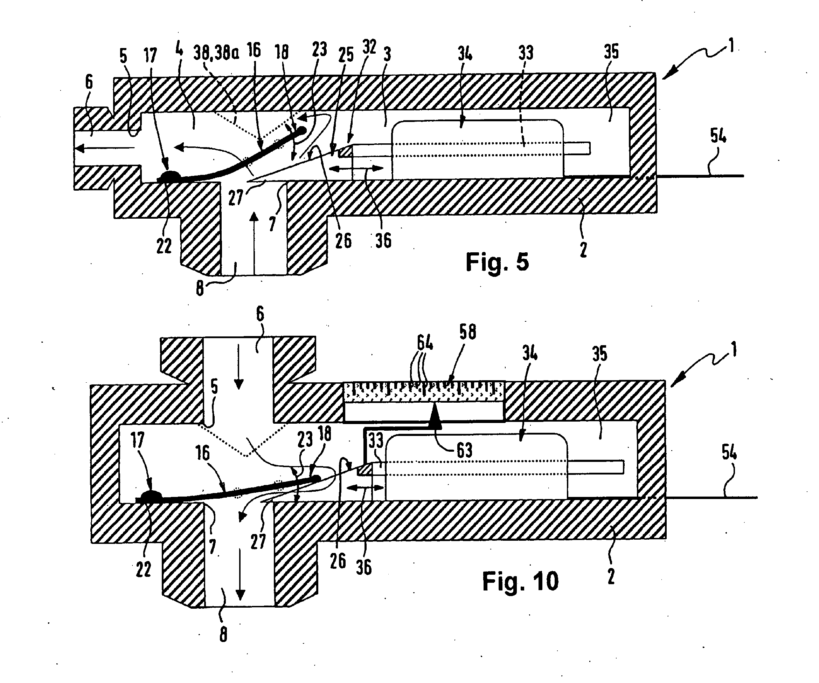

Bei den Ausführungsbeispielen der Figuren 1 bis 5 sind die Einlasskanalmündung 5 und die Auslasskanalmündung 7 winkelig, insbesondere im rechten Winkel zueinander angeordnet. Alternativ ist allerdings auch eine koaxiale Anordnung dieser Kanalmündungen 5, 7 möglich, was Anhand der in Figuren 10 bis 12 gezeigten Bauformen deutlich wird.

Im Innern der Ventilkammer 4 befindet sich ein als Membranelement ausgeführtes Ventilglied, das auf Grund seiner klappenförmigen Konzeption als Membranklappe 16 bezeichnet wird. Die Membranklappe 16 liegt der Auslasskanalmündung 7 gegenüber, über die sie sich hinweg erstreckt. Die Membranklappe 16 verfügt über eine Klappenrückseite 17 und eine dieser entgegengesetzte Klappenvorderseite 18 sowie zwei sich zwischen der Klappenrückseite 17 und der Klappenvorderseite 18 erstreckende Klappenlängsseiten 19. Der rückseitige Endabschnitt der Membranklappe 16 bildet einen Befestigungsabschnitt 22, über den die Membranklappe 16 auf einer Seite der Auslasskanalmündung 7 innerhalb der Ventilkammer 4 an der Wandung des Ventilgehäuses 2 befestigt ist. Die Befestigung kann beispielsweise durch Einspannen, Festschrauben, Festnieten, Schweißen oder Kleben stattfinden. Exemplarisch sind zwei Befestigungspunkte einer Schraubbefestigung gezeigt.

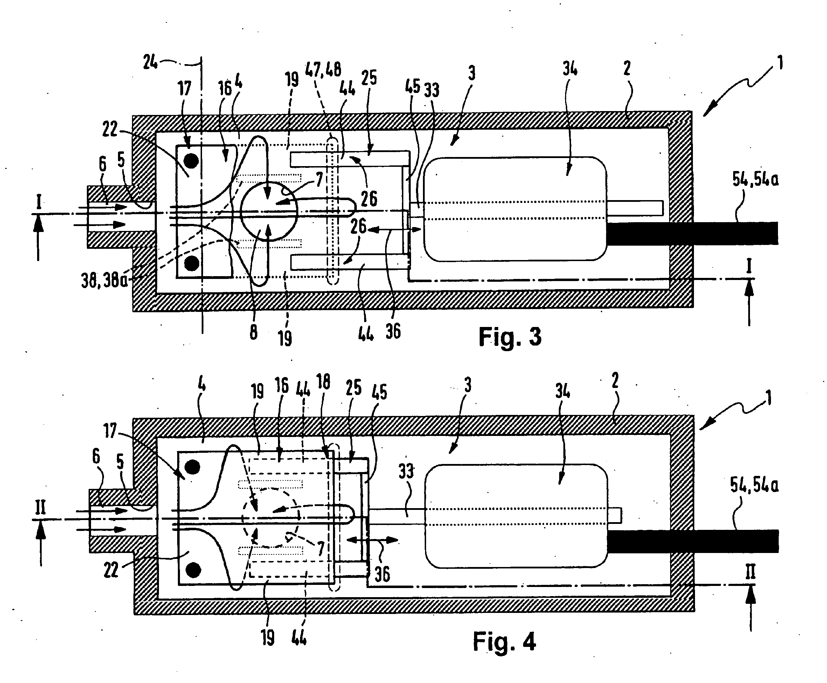

Ausgehend von der gehäusefest fixierten Klappenrückseite 17 erstreckt sich die Membranklappe 16 vollständig über die Auslasskanalmündung 7 hinweg, wobei letztere, in Draufsicht gemäß Figuren 3 und 4 gesehen, ringsum radial von der Membranklappe 16 überragt wird. Die Membranklappe 16 selbst hat zweckmäßigerweise einen rechteckigen Grundriss, wenngleich auch andere Formgebungen möglich sind.

Die Membranklappe 16 ist mit ihrem nicht gehäusefest fixierten Abschnitt relativ zum Ventilgehäuse 2 verschwenkbar. Die mögliche Schwenkbewegung ist bei 23 durch einen Doppelpfeil angedeutet. Die größte Auslenkung erfährt die Membranklappe 16 dabei an ihrer Klappenvorderseite 18.

Die Schwenkachse 24 der Schwenkbewegung 23 verläuft rechtwinkelig zu einer zwischen der Klappenrückseite 17 und der Klappenvorderseite 18 verlaufenden Längsachse der Membranklappe 16. Sie liegt im Bereich des Befestigungsabschnittes 22, wenngleich darauf hinzuweisen ist, dass insbesondere beim Ausführungsbeispiel keine eindeutige Schwenkachse 24 vorliegt. Dies hat seinen Grund in den insgesamt elastisch biegbaren Eigenschaften der Membranklappe 16, die zur Folge haben, dass sich die Membranklappe 16 durchwölben kann. Theoretisch wäre es jedoch auch denkbar, die Membranklappe 16 als starres Klappenelement auszuführen, das im Bereich des Befestigungsabschnittes 22 über ein die Schwenkachse 24 definierendes diskretes Gelenk am Ventilgehäuse 2 fixiert ist.

Insbesondere der Klappenvorderseite 18 ist ein zur Betätigung der Membranklappe 16 dienendes Betätigungselement zugeordnet, das auf Grund seiner im Wesentlichen keilförmigen Struktur als Betätigungskeil 25 bezeichnet wird. Der Betätigungskeil 25 greift von der Klappenvorderseite 18 her an der der Ausströmkanalmündung 7 zugewandten Unterseite unter die Membranklappe 16, die sich dabei, insbesondere mit ihrem vorderen Bereich, an einer von dem Betätigungskeil 25 definierten Steuerfläche 26 abstützt. Die verjüngte Keilvorderseite 27, exemplarisch als Keilspitze ausgebildet, ist dabei der Klappenrückseite 17, also dem Befestigungsabschnitt 22 zugewandt und die Steuerfläche 26 hat einen bezüglich der die Auslasskanalmündung 7 enthaltenden Mündungsebene geneigten, zur Keilrückseite 32 des Betätigungskeils 25 hin ansteigenden Verlauf.

Der Betätigungskeil 25 steht in Antriebsverbindung mit dem Abtriebsteil 33 einer bevorzugt elektrischen Antriebseinrichtung 34, die von dem Ventilgehäuse 2 getragen ist. Zweckmäßigerweise ist die Antriebseinrichtung 34 in einer Aufnahmekammer 35 im Innern des Ventilgehäuses 2 untergebracht und somit vor Umwelteinflüssen geschützt. Die Aufnahmekammer 35 ist beispielhaft ein Bestandteil des Gehäuseinnenraumes 3 und geht folglich unmittelbar und ohne Abtrennung in die Ventilkammer 4 über.

Das Abtriebsteil 33 greift zweckmäßigerweise im Bereich der Keilrückseite 32 an dem Betätigungskeil 25 an.

Durch entsprechend gesteuerten Betrieb der Antriebseinrichtung 34 kann der Betätigungskeil 25 zu einer durch einen Doppelpfeil angedeuteten Einstellbewegung 36 angetrieben werden. Die Einstellbewegung 36 ist eine Linearbewegung und verläuft in einer zu der Mündungsebene 28 parallelen Richtung und hierbei, in Draufsicht gemäß Figuren 3 und 4 gesehen, in Richtung der Längsachse der Membranklappe 16.

Je nach Bewegungsrichtung bewegt sich mithin der Betätigungskeil 25 bei seiner Einstellbewegung 36 in Richtung zur Klappenrückseite 17 oder in entgegengesetzter Richtung, wobei er die Membranklappe 16 mehr oder weniger weit unterfährt.

Beim Unterfahren der Membranklappe 16 gleitet diese auf der Steuerfläche 26 nach oben, sodass sie zunehmend von der Auslasskanalmündung 7 weggeschwenkt wird. Beim Herausziehen des Betätigungskeils 25 aus dem Zwischenraum unter der Membranklappe 16 gleitet letztere an der Steuerfläche 26 herunter und verringert somit ihren Abstand zur Auslasskanalmündung 7.

Der momentane Abstand zwischen der Membranklappe 16 und der Auslasskanalmündung 7 definiert den dem über dem Einlasskanal 6 in die Ventilkammer 4 einströmenden Fluid zur Verfügung stehenden Strömungsquerschnitt für das Überströmen in den Auslasskanal 8. Mithin kann durch Verstellen und Positionieren des Betätigungskeils 25 ein Strömungsquerschnitt variabel eingestellt werden. Das in die Ventilkammer 4 einströmende Fluid drückt von oben gegen die Membranklappe 16, wobei der Betätigungskeil 25 einen Anschlag bildet, der den Schwenkweg der Membranklappe 16 hin zur Auslasskanalmündung 7 begrenzt. Das überströmende Fluid strömt durch den zwischen der Membranklappe 16 und der dieser an der Unterseite gegenüberliegenden Wandung des Ventilgehäuses 2 definierten Spalt in den Auslasskanal 8 über.

Die Figuren 1 und 3 zeigen eine Einstellung für mittleren Durchfluss. Der Betätigungskeil 25 taucht etwa zur Hälfte unter die Membranklappe 16, sodass zwischen dieser und der darunter liegenden Ventilgehäusewandung ein Abstand mittlerer Größe als Strömungsspalt zur Verfügung steht.

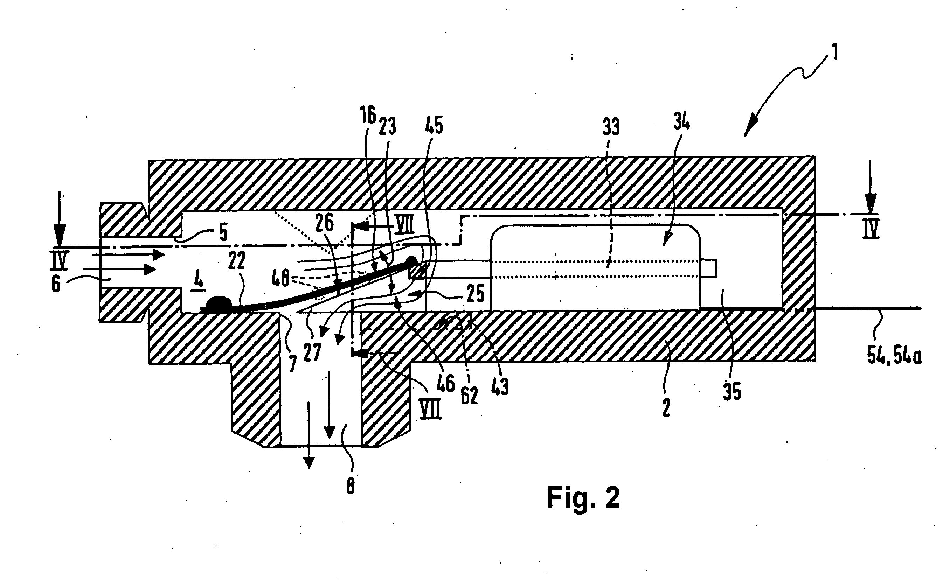

Bei der aus Figuren 2 und 4 ersichtlichen Einstellung ist der Betätigungskeil 25 maximal unter die Membranklappe 16 geschoben, sodass auch der den Strömungsspalt definierende Abstand zwischen Membranklappe 16 und darunter liegender Ventilgehäusewandung ein Maximum einnimmt und mithin einen maximalen Durchfluss zulässt.

Zur Vorgabe eines minimalen Durchflusses wird der Betätigungskeil 25 durch die Antriebseinrichtung 34 weitest möglich unter der Membranklappe 16 hervorgezogen. Dies kann dann dazu führen, dass die Membranklappe 16 durch den an ihrer Oberseite anstehenden Fluiddruck rings um die Auslasskanalmündung 7 herum an die diese begrenzende Ventilgehäusewandung angedrückt wird und dadurch die Verbindung zwischen Ventilkammer 4 und Auslasskanal 8 komplett abgesperrt wird.

Man kann jedoch auch Maßnahmen treffen, die ein komplettes Absperren dieser Fluidverbindung unter allen Umständen verhindern und auch bei weitest möglich herausgezogenem Betätigungskeil 25 noch eine minimale Durchflussrate zulassen. Solche Maßnahmen können beispielsweise in mindestens einem Stopperelement 37 bestehen, das unter der Membranklappe 16 neben der Auslasskanalmündung 7 angeordnet ist und von der Ventilgehäusewandung aus ein kleines Stück weit in Richtung zur Membranklappe 16 hin vorsteht. Die Höhe des Stopperelementes 37, von dem durchaus auch mehrere um die Auslasskanalmündung 7 verteilt vorhanden sein können, bestimmt dann den Minimalquerschnitt des Überströmspaltes.

Es ist insgesamt zweckmäßig, wenn der Betätigungskeil 25 nie komplett unter der Membranklappe 16 hervorgezogen wird. Dies lässt sich durch geeignete Hubbegrenzungsmaßnahmen gewährleisten, die durchaus auch in den Ansteuerungsmaßnahmen für die Antriebseinrichtung 34 liegen können. Dadurch ist stets ein zuverlässiges Unterfahren der Membranklappe 16 gewährleistet .

Die Membranklappe 16 kann gleichzeitig als Rückschlagventilglied fungieren, indem sie von dem Betätigungskeil 25 unter Entfernung von der Auslasskanalmündung 7 abheben kann, wenn über den Auslasskanal 8 ein Fluid zugeführt wird, dessen Druck größer ist als der im Einlasskanal 6 herrschende Druck. Die Figur 5 zeigt einen derart hervorgerufenen Zustand, der dann auftritt, wenn mittels eines dem Einlasskanal 6 vorgeschalteten Ventils eine Entlüftung des zuvor mit Fluid versorgten fluidtechnischen Gerätes 12 hervorgerufen wird, was vorzugsweise mit einer hohen Strömungsrate durchgeführt werden soll.

Insbesondere in Verbindung mit dieser Rückschlagfunktion ist es von Vorteil, wenn gegenüber der Oberseite der Membranklappe 16 gehäusefeste Anschlagmittel 38 vorhanden sind, die den Schwenkweg der Membranklappe 16 in der Öffnungsrichtung begrenzen. Dadurch kann beispielsweise eine Überdehnung oder ein Umstülpen und somit eine Beschädigung der Membranklappe 16 verhindert werden.

Außerdem kann durch geeignet ausgebildete Anschlagmittel 38 gewährleistet werden, dass die hochgeschwenkte Membranklappe 16 nicht mit der ihr an der Oberseite gegenüberliegenden Ventilgehäusewand kooperiert und dadurch möglicherweise den Strömungsweg für die Entlüftungsströmung partiell verschließt. Um diesen Effekt zu erreichen, bestehen die Anschlagmittel 38 zweckmäßigerweise aus einem oder mehreren, von der Oberseite her in Richtung zur Membranklappe 16 in die Ventilkammer 14 hineinragenden Gehäusevorsprüngen 38a, an denen die Membranklappe 16 zur Anlage gelangt, bevor sie die obere Ventilgehäusewand erreicht. Indem die Gehäusevorsprünge 38a nur lokal, mit gegenseitigem Abstand angeordnet sind, werden zudem zwischen benachbarten Gehäusevorsprüngen 38a sowie zwischen den Gehäusevorsprüngen 38a und der seitlichen Ventilgehäusewand Zwischenräume definiert, durch die das zurückströmende Fluid hindurchströmen kann.

Damit der Betätigungskeil 25 ein präzises Widerlager für die sich an ihm abstützende Membranklappe 16 bilden kann, liegt er zweckmäßigerweise mit seiner der Membranklappe 16 entgegengesetzten Unterseite gleitverschieblich an einer gehäusefesten Gleitlagerfläche 42 an. Die Gleitlagerfläche 42 kann unmittelbar von der Wandung des Ventilgehäuses 2 gebildet sein.

Soll gleichzeitig eine exakte Linearführung für die Einstellbewegung 36 des Betätigungskeils 25 erzielt werden, kann die Gleitlagerfläche 42 am Grund mindestens einer in Figur 2 strichpunktiert angedeuteten Führungsnut 43 ausgebildet sein, in die der Betätigungskeil 25 mit seinem Fußabschnitt eintaucht. Die mindestens eine Führungsnut 43 kann insbesondere in die Wandung des Ventilgehäuses 2 eingelassen sein.

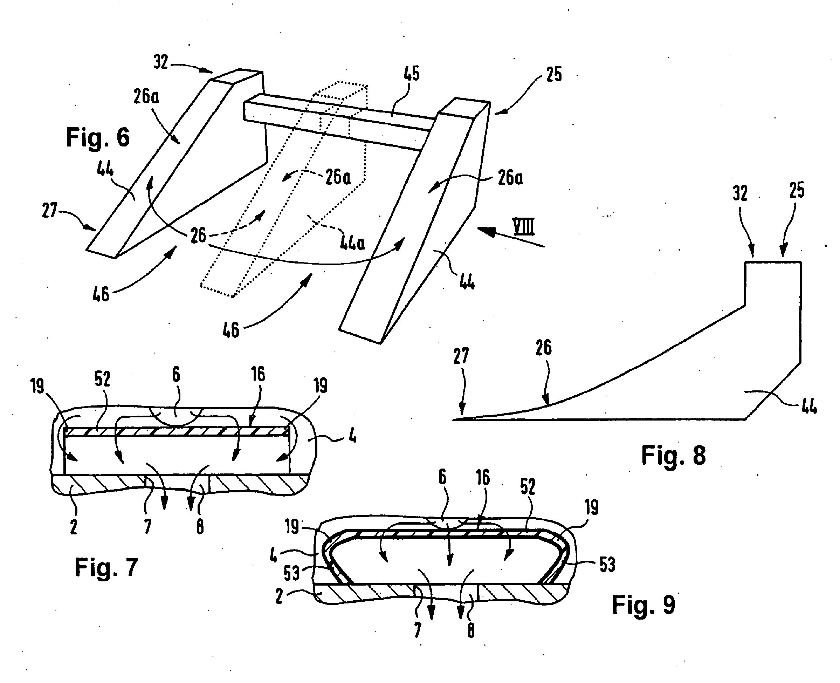

Eine besonders vorteilhafte Gestaltung des Betätigungskeil 25 sieht eine gabelförmige Strukturierung vor, wie sie insbesondere aus Figur 6 gut ersichtlich ist. Der Betätigungskeil 25 enthält hier mehrere quer zur Richtung der Einstellbewegung 36 mit Abstand nebeneinander angeordnete Keilkörper 44, die mittels mindestens eines bevorzugt im Bereich der Keilrückseite 32 angeordneten Quersteges 45 starr miteinander verbunden sind und je einem Gabelzinken der Gabelstruktur entsprechen. Die Steuerfläche 26 setzt sich aus an den Keilkörpern 44 ausgebildeten Teilflächen 26a zusammen. Der zwischen jeweils benachbarten Keilkörpern 44 vorhandene Zwischenraum definiert einen Überströmkanal 46, der es dem zwischen der Ventilkammer 4 und dem Auslasskanal 8 überströmenden Fluid ermöglicht, durch den Betätigungskeil 25 hindurchzuströmen. In diesem Zusammenhang ist es von Vorteil, wenn die Höhe des mindestens eine Quersteges 45 geringer ist als die Höhe des Betätigungskeils 25 im dortigen Bereich, sodass das Fluid ungehindert an dem Quersteg 45 vorbeiströmen kann.

Die letztgenannte Maßnahme ist nicht unbedingt erforderlich, wenn das Drosselventil 1 so ausgelegt ist, dass der Betätigungskeil 25 nie mit dem den Quersteg 45 aufweisenden Abschnitt unter die Membranklappe 16 taucht.

Der durch die Keilkörper 44 definierte mindestens eine Überströmkanal 46 ist einenends, im Bereich der Klappenvorderseite 18, zu der Auslasskanalmündung 7 hin offen und andernends zu der Ventilkammer 4, sodass er ungeachtet der momentan unter der Membranklappe 16 eingenommenen Position des Betätigungskeils 25 ein Hindurchströmen des Fluides gestattet.

Der mindestens eine Überströmkanal 46 könnte beispielsweise auch nach Art einer Bohrung in einem aus Vollmaterial bestehenden Betätigungskeil 25 ausgebildet sein.

Bei dem Ausführungsbeispiel der Figuren 1 bis 7 enthält der Betätigungskeil 25 nur zwei Keilkörper 44, die den Betätigungskeil 25 an den beiden Längsseiten begrenzen. Ist die Spannweite zwischen den beiden Keilkörpern 44 zu groß, um im Betrieb des Drosselventils 1 ein durch die Fluidbeaufschlagung hervorgerufenes unerwünschtes Durchbiegen der Membranklappe 16 zu verhindern, kann die Anzahl der Keilkörper 44 erhöht werden. Beispielhaft ist in Figur 6 ein dritter, mittig zwischen den beiden äußeren Keilkörpern 44 platzierter Keilkörper 44a angedeutet, der ebenfalls eine Teilfläche 26a der Steuerfläche 26 bildet, sodass die Membranklappe 16 in ihrer Breitenrichtung an drei Stellen von unten her abgestützt ist. Dadurch ist die Membranklappe 16 selbst bei sehr dünner Ausführung wirksam an einem unerwünschten Durchbiegen gehindert.

Gemäß Figur 6 kann die Steuerfläche 26 einen geradlinigen Schrägverlauf besitzen, vergleichbar einer schiefen Ebene, woraus eine lineare Kennlinie der Einstellbewegung 36 resultiert. Es ergibt sich hier eine lineare Abhängigkeit des momentan freigegebenen Strömungsquerschnittes von der Einstellbewegung 36 des Betätigungskeil 25.

Unter Umständen ist jedoch eine nicht lineare Kennlinie gewünscht. Diese kann dann sehr einfach mittels eines nicht linearen Längsverlaufes der Steuerfläche 26 hervorgerufen werden. Exemplarisch zeigt hierzu die Figur 8 die Seitenansicht eines Betätigungskeil 25, dessen Steuerfläche 26 in der Nähe der Keilvorderseite 27 konkav gewölbt ist und zur Keilrückseite 32 hin mit einem geradlinigen Schrägverlauf ausläuft. Dies ist jedoch nur ein mögliches Beispiel; anwendungsspezifisch kann der Verlauf der Steuerfläche 26 praktisch beliebig ausgeführt werden.

Den größten Anpressdruck erfährt die Membranklappe 16 durch den Betätigungskeil 25 im Bereich ihrer Klappenvorderseite 18. Damit gleichwohl, auch unter Fluidbelastung, stets eine reibungsarme,mithin leichtgängige Veränderung der Durchflusseinstellung möglich ist, empfiehlt es sich, die Membranklappe 16 im Bereich ihrer Klappenvorderseite 18 mit einer sich quer zu der Einstellbewegung 36 erstreckenden biegesteifen Gleitleiste 47 auszustatten, die auf der Steuerfläche 26 entlanggleiten kann. Sie besteht ungeachtet der restlichen Materialwähl vorzugsweise aus einem starren Kunststoffmaterial oder Metall mit geringem Reibungskoeffizient. Die Gleitleiste 47 kann, wie dies z.B. in Figuren 1 und 2 zum Ausdruck kommt, eine einstückige Komponente der Membranklappe 16 sein, beispielsweise einstückig angeformt. Alternativ kann es sich aber auch gemäß Figuren 3 und 4 um eine separate Komponente handeln, die durch geeignete Befestigungsmaßnahmen fixiert ist. In allen Fällen kann die Gleitleiste 47 auch als Versteifungselement 48 fungieren, das eine Durchbiegung der Membranklappe 16 quer zur Richtung der Einstellbewegung 36 verhindert.

Wie in Figuren 1 und 2 gepunktet angedeutet ist, kann die Membranklappe 16 auch noch an anderer Stelle mit Versteifungselementen 48 ausgestattet sein, beispielsweise in gewissen Abständen über die Länge der Membranklappe 16 hinweg verteilt.

Vorzugsweise beinhaltet die Membranklappe 16 als Hauptkomponente einen aus elastisch biegbarem Material bestehenden dünnwandigen Membrankörper 52. Hierbei könnte es sich durchaus um ein folienartig dünnes Metallelement handeln. Wegen der günstigen Verformungseigenschaften wird man allerdings in der Regel ein über gummielastische Eigenschaften verfügendes Material vorziehen. Letzteres ist bei den Ausführungsbeispielen der Fall. Speziell in Verbindung mit einem gummielastischen Membrankörper 52 empfehlen sich die oben erwähnten Versteifungselemente 48, wobei es sich um separate Elemente handeln kann oder um einstückig angeformte Komponenten, beispielsweise gebildet durch Materialverdickungen des Membrankörpers 52.

Abgesehen von dem Ausführungsbeispiel der Figur 9 ist die Membranklappe 16 bei allen abgebildeten Drosselventilen ein Flachgestalt aufweisendes zungenartiges Element, das lediglich an dem rückseitigen Befestigungsabschnitt 22 ventilgehäuseseitig befestigt ist. Dies hat zur Folge, dass das über den Einlasskanal 6 in die Ventilkammer 4 einströmende Fluid sowohl im Bereich der beiden Klappenlängsseiten 19 als auch im Bereich der Klappenvorderseite 18 in den unter der Membranklappe 16 liegenden Bereich einströmen kann. Man erkennt dies gut anhand den in den Figuren 3, 4 und 7 eingezeichneten Strömungspfeilen.

Bei der aus Figur 9 ersichtlichen modifizierten Bauform ist die Membranklappe 16 zusätzlich im Bereich ihrer beiden Klappenlängsseiten 19 am Ventilgehäuse 2 fixiert. Indem dies unter Vermittlung flexibler Wandabschnitte 53 geschieht, bleibt die Schwenkbeweglichkeit der Membranklappe 16 gleichwohl erhalten. Die Flexibilität der Wandabschnitte 53 resultiert beispielsweise aus einer elastischen Dehnbarkeit und/oder aus einem nicht linearen Verlauf, beispielsweise einem gewölbten, mäanderförmigen und/oder faltenbalgähnlichen Verlauf. Die flexiblen Wandabschnitte 53 können sich auf diese Weise beim Verschwenken der Membranklappe 16 je nach Schwenkrichtung strecken oder zusammenfalten.

Aus der vorgenannten Gestaltung ergibt sich eine taschenartige Konfiguration, wobei der Fluidübertritt aus der Ventilkammer 4 in den unter der Membranklappe 16 liegenden Bereich ausschließlich über den im Bereich der Klappenvorderseite 18 freigelegten Spalt stattfinden kann.

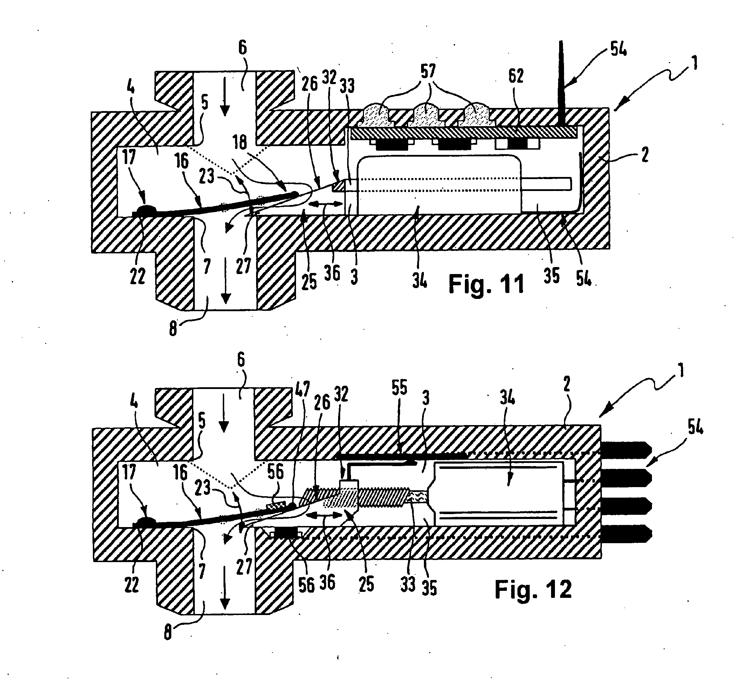

Die bereits erwähnte Antriebseinrichtung 34 ist zweckmäßigerweise eine Linearantriebseinrichtung. Sie kann beispielsweise als Tauchanker konzipiert sein oder, gemäß den Ausführungsbeispielen der Figuren 1 bis 5, 10 und 11 als Piezoantriebseinrichtung. Von Vorteil ist eine Antriebseinrichtung 34, bei der das Abtriebsteil 33 in jeder eingestellten Position durch Selbsthemmung gesichert ist und seine Position auch bei Entfernen der Betätigungsspannung beibehält. Eine Piezoantriebseinrichtung ist hierfür besonders prädestiniert, aber auch eine Spindelantriebseinrichtung, wie sie bei der Ausführungsform der Figur 12 zum Einsatz kommt. Während das Abtriebsteil 33 bei den anderen Ausführungsbeispielen seinerseits wie der Betätigungskeil 25 eine Linearbewegung ausführt, wird es gemäß Figur 12 rotativ angetrieben und ist als Gewindespindel ausgeführt, die mit dem Betätigungskeil 25 in Gewindeeingriff steht, sodass ihre Rotationsbewegung in eine lineare Einstellbewegung 36 umgesetzt wird.

Andere Antriebskonzepte sind selbstverständlich ebenfalls möglich. Man könnte den Betätigungskeil 25 auch pneumatisch oder manuell positionieren.

Bevorzugt liegen Membranklappe 16, Betätigungskeil 25 und Antriebseinrichtung 34 hintereinander im Wesentlichen auf einer Linie. Dies ermöglicht eine besonders flache Bauweise des Drosselventils 1.

Um der elektrischen Antriebseinrichtung 34 die erforderlichen Betätigungssignale übermitteln zu können, ist das Drosselventil 1 mit je mindestens einer geeigneten Kommunikationsschnittstelle 54 ausgestattet. Bei den Ausführungsbeispielen der Figuren 1 bis 5, 10 und 12 ist die Kommunikationsschnittstelle 54 für drahtgebundene Signalübertragung ausgelegt. Im Falle der Figuren 1 bis 5 und 10 ist sie von einer elektrischen Leitung 54a gebildet, die druckdicht durch die Wandung des Ventilgehäuses 2 hindurchgeführt und von außen her zugänglich ist. Im Falle der Figur 12 ist sie als außen am Ventilgehäuse 2 angeordnete Steckverbindungseinrichtung ausgeführt .

Hiervon abweichend ist alternativ oder zusätzlich auch eine für drahtlose Signalkommunikation geeignete Kommunikationsschnittstelle 54 möglich, was in Figur 11 angedeutet ist. Die drahtlose Kommunikationsschnittstelle 54 ermöglicht beispielsweise eine induktive Kopplung und/oder eine Signalübertragung per Funk.

Über die gleichen Kommunikationsschnittstellen 54 können bei Bedarf auch Positionssignale ausgegeben werden, die in dem Drosselventil 1 eingebaute Positionserfassungsmittel 55, 56 ausgeben. Wie sich anhand der Figur 12 nachvollziehen lässt, können Positionserfassungsmittel 55 vorhanden sein, mit denen die momentane Einstellposition des Betätigungskeils 25 erfassbar ist. Ebenso sind Positionserfassungsmittel 56 möglich, mit denen sich die aktuelle Schwenkposition der Membranklappe 16 ermitteln lässt. In allen Fällen können die Positionssignale über die Kommunikationsschnittstellen 54 an eine externe Steuerung übertragen werden, um darauf aufbauend geeignete Betätigungssignale für die zugeordnete Antriebseinrichtung zu generieren.

Zusätzlich oder alternativ können auch Positionsanzeigemittel 57, 58 vorhanden sein, um die aktuelle Position des Betätigungskeils 25 und/oder der Membranklappe 16 unmittelbar am Drosselventil 1 zu visualisieren. Gemäß Figur 11 sind diese Positionsanzeigemittel 57 als Leuchtanzeigemittel, beispielsweise LEDs ausgeführt, die auf einer Elektronikplatine 62 sitzen können, welche beispielsweise ebenfalls in dem Gehäuseinnenraum 3 untergebracht ist. Diese Elektronikplatine 62 kann zusätzlich oder alternativ auch Elektronikkomponenten für die Signalaufbereitung und die Signalübertragung enthalten.

Gemäß Figur 10 können die Positionsanzeigemittel 58 auch rein optomechanisch ausgebildet sein. Ein mit dem Betätigungskeil 25 bewegungsgekoppelter Zeiger 63 läuft in dem Gehäuseinnenraum 35 entlang einer Skala 64, die im Bereich eines lichtdurchlässigen Wandabschnittes des Ventilgehäuses 2 angeordnet ist.

Die anhand der verschiedenen Ausführungsbeispiele erläuterten Merkmale sind nicht auf das jeweils zugeordnete Ausführungsbeispiel beschränkt, sondern können auch beliebig untereinander ausgetauscht oder kombiniert werden.

## Patentansprüche

1. Drosselventil, mit einer in einem Ventilgehäuse (2) ausgebildeten Ventilkammer (4), in die ein Einlasskanal (6) und ein Auslasskanal (8) münden und in der ein Membranelement gegenüberliegend einer der Kanalmündungen angeordnet ist, an dem ein verstellbares Betätigungsglied angreift, mit dem der Abstand zwischen dem Membranelement und der zugeordneten Kanalmündung und somit der einem hindurchströmenden Fluid zur Verfügung stehende Strömungsquerschnitt einstellbar ist, **dadurch gekennzeichnet, dass** das Membranelement als sich über die Auslasskanalmündung (7) hinweg erstreckende, an einem rückseitigen Befestigungsabschnitt (22) gehäusefest fixierte schwenkbar Membranklappe (16) ausgebildet ist, und das das Betätigungsglied ein Betätigungskeil (25) ist, der die Membranklappe (16) zur Einstellung deren bezüglich der Auslasskänalmündung (7) eingenommenen Abstandes an der der Ausströmkanalmündung (7) zugewandten Unterseite unter Ausführung einer Einstellbewegung (36) mehr oder weniger weit unterfahren kann.

2. Drosselventil nach Anspruch 1, **dadurch gekennzeichnet, dass** die verjüngte Keilvorderseite (27) des Betätigungskeils (25) dem Befestigungsabschnitt (22) der Membranklappe (16) zugewandt ist, wobei der Betätigungskeil (25) die Membranklappe (16) im Bereich ihrer dem Befestigungsabschnitt (22) entgegengesetzten Keilvorderseite (27) unterfahren kann, wobei die Einstellbewegung in Richtung zu dem Befestigungsabschnitt (22) oder entgegengesetzt orientiert ist.

3. Drosselventil nach Anspruch 1 oder 2, **dadurch gekennzeichnet, dass** der Betätigungskeil (25) mit seiner der Membranklappe (16) entgegengesetzten Unterseite gleitverschieblich an einer gehäusefesten Gleitlagerfläche (42) anliegt.

4. Drosselventil nach Anspruch 3, **dadurch gekennzeichnet, dass** die Gleitlagerfläche (42) am Grund mindestens einer bezüglich dem Ventilgehäuse (2) ortsfesten, den Betätigungskeil (25) in seiner Einstellbewegung (36) führenden Führungsnut (43) ausgebildet ist.

5. Drosselventil nach einem der Ansprüche 1 bis 4, **dadurch gekennzeichnet, dass** der Betätigungskeil (25) von mindestens einem Überströmkanal (46) durchsetzt ist, der einenends zu der Auslasskanalmündung (7) und andernends zu der Ventilkammer (4) hin offen ist, derart, dass er ungeachtet der momentan bezüglich der Membranklappe (16) eingenommenen Position des Betätigungskeils (25) einen Fluidübertritt zwischen dem Einlasskanal (6) und dem Auslasskanal (8) gestattet.

6. Drosselventil nach Anspruch 5, **dadurch gekennzeichnet, dass** der Betätigungskeil (25) mehrere quer zur Richtung der Einstellbewegung (36) mit Abstand nebeneinander angeordnete Keilkörper (44, 44a) aufweist, die zwischen sich jeweils einen von dem zwischen dem Einlasskanal (6) und dem Auslasskanal (8) überströmenden Fluid durchströmbaren Überströmkanal (46) definieren.

7. Drosselventil nach Anspruch 6, **dadurch gekennzeichnet, dass** der Betätigungskeil (25) gabelförmig mit wenigstens zwei von je einem Keilkörper (44, 44a) gebildeten Gabelzinken und mindestens einem die Gabelzinken insbesondere rückseitig starr miteinander verbindenden Quersteg (45) ausgebildet ist.

8. Drosselventil nach einem der Ansprüche 1 bis 7, **dadurch gekennzeichnet, dass** der Betätigungskeil (25) eine der Membranklappe (16) zugewandte, ausgehend von der verjüngten Keilvorderseite (27) zur Keilrückseite (32) hin ansteigende Steuerfläche (26) definiert, auf der die Membranklappe (16) unter gleichzeitigem Verschwenken abgleitet, wenn der Betätigung keil (25) die Einstellbewegung (36) ausführt.

9. Drosselventil nach Anspruch 8, **dadurch gekennzeichnet, dass** die Steuerfläche (26) zumindest teilweise einen geradlinigen Schrägverlauf besitzt.

10. Drosselventil nach Anspruch 8 oder 9, **dadurch gekennzeichnet, dass** die Steuerfläche (26) zumindest teilweise konkav gekrümmt verläuft.

11. Drosselventil nach einem der Ansprüche 1 bis 10, **dadurch gekennzeichnet, dass** die Membranklappe (16) im Bereich ihrer dem Befestigungsabschnitt (22) entgegengesetzten Klappenvorderseite (18) eine quer verlaufende biegesteife Gleitleiste (47) aufweist, mit der sie auf dem Betätigungskeil (25) abgleiten kann, wenn dieser seine Binstellbewegung (36) ausführt.

12. Drosselventil nach einem der Ansprüche 1 bis 11, **dadurch gekennzeichnet, dass** die Membranklappe (16) zur Gewährleistung ihrer Schwenkbarkeit elastisch biegbar ausgebildet ist.

13. Drosselventil nach Anspruch 12, **dadurch gekennzeichnet, dass** die Membranklappe (16) einen aus elastisch biegbarem Flachmaterial bestehenden Membrankörper (52) aufweist.

14. Drosselventil nach Anspruch 13, **dadurch gekennzeichnet, dass** der Membrankörper aus Material mit gummielastischen Eigenschaften besteht.

15. Drosselventil nach Anspruch 13 oder 14, **dadurch gekennzeichnet, dass** der Membrankörper (52) mit mindestens einem sich quer zur Richtung der Einstellbewegung (36) erstreckenden Versteifungselement (48) versehen ist.

16. Drosselventil nach einem der Ansprüche 1 bis 15, **dadurch gekennzeichnet, dass** die Membranklappe (16), abgesehen von ihrem rückseitigen Befestigungsabschnitt (22), bezüglich dem ventilgehäuse (2) lose ist, derart, dass sie im von der Auslasskanalmündung (7) abgehobenen Zustand sowohl vorne als auch seitlich von dem in der ventilkammer (4) befindlichen Fluid unterströmbar ist.

17. Drosselventil nach einem der Ansprüche 1 bis 16, **dadurch gekennzeichnet, dass** die Membranklappe (16) in ihren beiden sich zwischen dem rückseitigen Befestigungsabschnitt (22) und der entgegengesetzten Klappenvorderseite (18) erstreckenden seitlichen Randabschnitten (19) über je einen sich beim Verschwenken der Membranklappe (16) entsprechend verformenden flexiblen Wandabschnitt (53) gehäusefest fixiert ist.

18. Drosselventil nach Anspruch 17, **dadurch gekennzeichnet, dass** der flexible Wandabschnitt (53) beim Verschwenken der Membranklappe (16) faltbar ist.

19. Drosselventil nach einem der Ansprüche 1 bis 18, **dadurch gekennzeichnet, dass** der Betätigungskeil (25) derart strukturiert und angeordnet ist, dass er bei seiner Einstellbewegung (36) ohne Überdeckung der Auslasskanalmündung (7) an dieser vorbeigreifen kann.

20. Drosselventil nach einem der Ansprüche 1 bis 19, **dadurch gekennzeichnet, dass** es mit einer an dem Betätigungskeil (25) angreifenden, dessen Einstellbewegung (36) hervorrufenden Antriebseinrichtung (34) ausgestattet ist, insbesondere eine Linearantriebseinrichtung.

21. Drosselventil nach Anspruch 20, **dadurch gekennzeichnet, dass** die Antriebseinrichtung (34) eine elektrische Antriebseinrichtung ist, beispielsweise eine Piezoantriebseinrichtung oder eine Spindelantriebseinrichtung.

22. Drosselventil nach Anspruch 20 oder 21, **dadurch gekennzeichnet, dass** die Antriebseinrichtung (34) in Richtung der Einstellbewegung (36) auf der der Membranklappe (16) entgegengesetzten Rückseite des Betätigungskeils (25) angeordnet ist, insbesondere mit dem Betätigungskeil (25) und der Membranklappe (16) in einer gemeinsamen Ebene liegend.

23. Drosselventil nach einem der Ansprüche 20 bis 22, **dadurch gekennzeichnet, dass** die Antriebseinrichtung (34) zur Umgebung hin gekapselt in einer Aufnahmekammer (35) des Ventilgehäuses (2) untergebracht ist.

24. Drosselventil nach Anspruch 23, **dadurch gekennzeichnet, dass** die Ventilkammer (4) und die Aufnahmekammer (35) miteinander verbunden und gemeinsam von einem Gehäuseinnenraum (3) des Ventilgehäuses (2) gebildet sind.

25. Drosselventil nach einem der Ansprüche 20 bis 24, **dadurch gekennzeichnet, dass** es mit mindestens einer Kommunikationsschnittstelle (54) zur drahtgebundenen und/oder drahtlosen Signalkommunikation mit einer externen Einrichtung ausgestattet ist.

26. Drosselventil nach einem der Ansprüche 1 bis 25, **gekennzeichnet durch** Positionserfassungsmittel (55, 56) und/oder Positionsanzeigemittel (57, 58) zur Erfassung und/Anzeige der Einstellposition des Betätigungskeils (25) und/oder der Schwenkposition der Membranklappe (16).

27. Drosselventil nach einem der Ansprüche 1 bis 26, **dadurch gekennzeichnet, dass** gegenüberliegend der Oberseite der Membranklappe (16) deren Schwenkweg begrenzende Anschlagmittel (38) vorhanden sind, die insbesondere aus mindestens einem in die Ventilkammer (4) vorstehenden Gehäusevorsprung (38a) bestehen.

28. Drosselventil nach einem der Ansprüche 1 bis 27, **dadurch gekennzeichnet, dass** die Einlasskanalmündung (5) und die Auslasskanalmündung (7) winkelig zueinander angeordnet sind oder sich koaxial gegenüberliegen.

29. Drosselventil nach einem der Ansprüche 1 bis 28, **dadurch gekennzeichnet, dass** an dem Ventilgehäuse (2) ein von dem Auslasskanal (8) durchsetzter Anschlussstutzen (13) ausgebildet ist, der die Befestigung des Drosselventils an einem fluidtechnischen Gerät (12) ermöglicht.

30. Drosselventil nach einem der Ansprüche 1 bis 29, **dadurch gekennzeichnet, dass** neben der Auslasskanalmündung (7) mindestens ein zur Membranklappe (16) hin in die Ventilkammer (4) vorstehendes Stopperelement (37) vorhanden ist, das einen Minimalabstand zwischen Membranklappe (16) und Auslasskanalmündung (7) vorgibt.

31. Drosselventil nach einem der Ansprüche 1 bis 30, **dadurch gekennzeichnet, dass** die Membranklappe (16) derart schwenkbeweglich ausgebildet ist, dass sie von dem Betätigungskeil (25) abhebt, wenn in dem Auslasskanal (8) ein höherer Fluiddruck herrscht, als in dem Einlasskanal (6).

## Claims

1. Restrictor valve with a valve chamber (4) formed in a valve casing (2) and into and out of which lead an inlet passage (6) and an outlet passage (8), and in which a membrane element is provided opposite one of the passage openings and is acted on by an adjustable actuating element through which the distance between the membrane element and the assigned passage opening and therefore the flow cross-section available to a fluid flowing through is adjustable, **characterised in that** the membrane element is in the form of a pivotable membrane flap (16) extending over the outlet passage opening (7) and fixed to the casing at a rear mounting section (22), and that the actuating element is an actuating wedge (25) which is able to pass to a greater or lesser extent beneath the membrane flap (16), executing an adjusting movement (36) to adjust its distance from the outlet passage opening (7), at the underside facing the outlet passage opening (7).

2. Restrictor valve according to claim 1, **characterised in that** the tapering wedge front (27) of the actuating wedge (25) faces the mounting section (22) of the membrane flap (16), wherein the actuating wedge (25) is able to pass beneath the membrane flap (16) in the area of its wedge front (27) which is opposite the mounting section (22), wherein the adjusting movement is oriented towards or away from the mounting section (22).

3. Restrictor valve according to claim 1 or 2, **characterised in that** the underside of the actuating wedge (25) opposite the membrane flap (16) fits up, with the ability to slide, against a plain bearing face (42) fixed to the casing.

4. Restrictor valve according to claim 3, **characterised in that** the plain bearing face (42) is formed at the base of at least one guide slot (43) which is stationary relative to the valve casing (2) and guides the actuating wedge (25) in its adjusting movement (36).

5. Restrictor valve according to any of claims 1 to 4, **characterised in that** at least one overflow passage (46) passes through the actuating wedge (25) and is open at one end to the outlet passage opening (7) and at the other end to the valve chamber (4) in such a way that it allows a fluid overflow between the inlet passage (6) and the outlet passage (8), irrespective of the momentary position of the actuating wedge (25) relative to the membrane flap (16).

6. Restrictor valve according to claim 5, **characterised in that** the actuating wedge (25) has several wedge bodies (44, 44a), arranged next to one another spaced apart and at right-angles to the adjusting movement (36), which between them in each case define an overflow passage (46) through which may flow fluid overflowing between the inlet passage (6) and the outlet passage (8).

7. Restrictor valve according to claim 6, **characterised in that** the actuating wedge (25) is fork-shaped with at least two fork arms, each formed by a wedge body (44, 44a), and at least one transverse web (45) connecting the fork arms to one another, in particular rigidly at the rear.

8. Restrictor valve according to any of claims 1 to 7, **characterised in that** the actuating wedge (25) defines a control face (26) which faces the membrane flap (16), rising from the tapering wedge front (27) towards the wedge rear (32), and on which the membrane flap (16) slides away and simultaneously pivots when the actuating wedge (25) executes the adjusting movement (36).

9. Restrictor valve according to claim 8, **characterised in that** the control face (26) has at least partly a straight, inclined course.

10. Restrictor valve according to claim 8 or 9, **characterised in that** the course of the control face (26) runs at least partly in a concave curve.

11. Restrictor valve according to any of claims 1 to 10, **characterised in that** the membrane flap (16) has, in the area of its flap front (18) opposite the mounting section (22), a rigid slide strip (47) running at right-angles, by which it is able to slide on the actuating wedge (25) when the latter executes its adjusting movement (36).

12. Restrictor valve according to any of claims 1 to 11, **characterised in that** the membrane flap (16), to ensure it is able to pivot, is made capable of bending flexibly.

13. Restrictor valve according to claim 12, **characterised in that** the membrane flap (16) has a membrane body (52) made of flat material which is able to bend flexibly.

14. Restrictor valve according to claim 13, **characterised in that** the membrane body is made of material with rubber-elastic properties.

15. Restrictor valve according to claim 13 or 14, **characterised in that** the membrane body (52) is provided with at least one reinforcing element (48) extending at right-angles to the direction of the adjusting movement (36).

16. Restrictor valve according to any of claims 1 to 15 **characterised in that** the membrane flap (16), apart from its rear mounting section (22), is loose relative to the valve casing (2) in such a way that, when raised from the outlet passage opening (7), the fluid in the valve chamber (4) may flow beneath it both at the front and at the sides.

17. Restrictor valve according to any of claims 1 to 16 **characterised in that** the membrane flap (16), at its two side edge sections (19) extending between the rear mounting section (22) and the opposite flap front (18), is fixed in each case securely to the casing by a flexible wall section (53) which is suitably deformed on pivoting of the membrane flap (16).

18. Restrictor valve according to claim 17, **characterised in that** the flexible wall section (53) is able to fold on pivoting of the membrane flap (16).

19. Restrictor valve according to any of claims 1 to 18, **characterised in that** the actuating wedge (25) is so structured and mounted that, in its adjusting movement (36), it is able to reach past the outlet passage opening (7) without covering it.

20. Restrictor valve according to any of claims 1 to 19, **characterised in that** it is equipped with a drive unit (34), in particular a linear drive unit, which acts on the actuating wedge (25) and generates its adjusting movement (36).

21. Restrictor valve according to claim 20, **characterised in that** the drive unit (34) is an electrical drive unit, for example a piezoelectric drive unit or a spindle drive unit.

22. Restrictor valve according to claim 20 or 21, **characterised in that** the drive unit (34) is mounted in the direction of the adjusting movement (36) on the rear of the actuating wedge (25) opposite the membrane flap (16), in particular with the actuating wedge (25) and the membrane flap (16) lying on a common plane.

23. Restrictor valve according to any of claims 20 to 22, **characterised in that** the drive unit (34) is accommodated in a mounting chamber (35) of the valve casing (2), protected from the environment.

24. Restrictor valve according to claim 23, **characterised in that** the valve chamber (4) and the mounting chamber (35) are connected to one another, and together form a casing interior (3) of the valve casing (2).

25. Restrictor valve according to any of claims 20 to 24, **characterised in that** it is equipped with at least one communications interface (54) for wired and/or wireless signal communication with an external device.

26. Restrictor valve according to any of claims 1 to 25, **characterised by** position detection means (55, 56) and/or position display means (57, 58) for the detection and/or display of the set position of the actuating wedge (25) and/or the swivel position of the membrane flap (16).

27. Restrictor valve according to any of claims 1 to 26, **characterised in that** opposite the top of the membrane flap (16) and limiting its swivel path there are provided stop means (38), comprising in particular a casing projection (38a) extending into the valve chamber (4).

28. Restrictor valve according to any of claims 1 to 27, **characterised in that** the inlet passage opening (5) and the outlet passage opening (7) are arranged at an angle to one another or are coaxially opposite one another.

29. Restrictor valve according to any of claims 1 to 28, **characterised in that** there is formed on the valve casing (2) a pipe connection (13) through which passes the outlet passage (8) and which allows the attachment of the restrictor valve to a fluidic device (12).

30. Restrictor valve according to any of claims 1 to 29, **characterised in that** there is provided adjacent to the outlet passage opening (7) at least one stop element (37) extending into the valve chamber (4) towards the membrane flap (16) and presetting a minimum distance between the membrane flap (16) and the outlet passage opening (7).

31. Restrictor valve according to any of claims 1 to 30, **characterised in that** the membrane flap (16) is designed to be pivotable in such a way that it is raised from the actuating wedge (25) when the fluidic pressure in the outlet passage (8) is higher than that in the inlet passage (6).

## Revendications

1. Valve d'étranglement, avec une chambre de valve (4) réalisée dans un boîtier de valve (2), dans laquelle un canal d'admission (6) et un canal d'évacuation (8) débouchent et dans laquelle un élément à membrane est disposé à l'opposé de l'un des débouchés de canal, sur lequel un organe d'actionnement réglable agit, avec lequel la distance entre l'élément à membrane et le débouché de canal associé et ainsi la section d'écoulement se trouvant à la disposition d'un fluide passant à travers peuvent être réglées, **caractérisée en ce que** l'élément à membrane est réalisé comme un volet à membrane (16) pivotant s'étendant au-delà du débouché de canal d'évacuation (7), fixé de manière solidaire du boîtier sur une section de fixation (22) situé du côté arrière, et **en ce que** l'organe d'actionnement est un coin d'actionnement (25) qui peut se déplacer plus ou moins loin sous le volet à membrane (16) pour le réglage de sa distance occupée par rapport au débouché de canal d'évacuation (7) sur le dessous tourné vers le débouché de canal d'écoulement (7) en réalisant un mouvement de réglage (36).

2. Valve d'étranglement selon la revendication 1, **caractérisée en ce que** le côté avant de coin (27) rétréci du coin d'actionnement (25) est tourné vers la section de fixation (22) du volet à membrane (16), le coin d'actionnement (25) pouvant se déplacer sous le volet à membrane (16) dans la zone de son côté avant de coin (27) opposé à la section de fixation (22), le mouvement de réglage étant orienté en direction de la section de fixation (22) ou à l'opposé.

3. Valve d'étranglement selon la revendication 1 ou 2, **caractérisée en ce que** le coin d'actionnement (25) repose avec son dessous opposé au volet à membrane (16) avec possibilité de translation sur une face d'appui et de glissement (42) solidaire du boîtier.

4. Valve d'étranglement selon la revendication 3, **caractérisée en ce que** la face d'appui et de glissement (42) est réalisée sur le fond d'au moins une rainure de guidage (43) fixe par rapport au boîtier de valve (2), guidant le coin d'actionnement (25) dans son mouvement de réglage (36).

5. Valve d'étranglement selon l'une des revendications 1 à 4, **caractérisée en ce que** le coin d'actionnement (25) est traversé par au moins un canal de transfert (46) qui est ouvert au niveau d'une extrémité vers le débouché de canal d'évacuation (7) et au niveau de l'autre extrémité vers la chambre de valve (4), de sorte qu'il autorise un transfert de fluide entre le canal d'admission (6) et le canal d'évacuation (8) quelle que soit la position prise momentanément par rapport au volet à membrane (16) du coin d'actionnement (25).

6. Valve d'étranglement selon la revendication 5, **caractérisée en ce que** le coin d'actionnement (25) présente plusieurs corps de coin (44, 44a) disposés à distance l'un de l'autre transversalement à la direction du mouvement de réglage (36), lesquels définissent entre eux à chaque fois un canal de transfert (46) pouvant être traversé par le fluide de transfert entre le canal d'admission (6) et le canal d'évacuation (8).

7. Valve d'étranglement selon la revendication 6, **caractérisée en ce que** le coin d'actionnement (25) est réalisé de manière fourchue avec au moins deux bras de fourche formés chacun par un corps de coin (44, 44a) et au moins une branche transversale (45) reliant rigidement l'un à l'autre les bras de fourche en particulier à l'arrière.

8. Valve d'étranglement selon l'une des revendications 1 à 7, **caractérisée en ce que** le coin d'actionnement (25) définit une surface de commande (26) tournée vers le volet à membrane (16), montante à partir du côté avant de coin rétréci (27) vers le côté arrière de coin (32), sur laquelle le volet à membrane (16) glisse en pivotant simultanément lorsque le coin d'actionnement (25) réalise le mouvement de réglage (36).

9. Valve d'étranglement selon la revendication 8, **caractérisée en ce que** la surface de commande (26) possède au moins en partie un parcours oblique rectiligne.

10. Valve d'étranglement selon la revendication 8 ou 9, **caractérisée en ce que** la surface de commande (26) s'étend au moins partiellement en courbe de manière concave.

11. Valve d'étranglement selon l'une des revendications 1 à 10, **caractérisée en ce que** le volet à membrane (16) présente dans la zone de son côté avant de volet (18) opposé à la section de fixation (22) une glissière (47) rigide en flexion, s'étendant transversalement, avec laquelle il peut glisser sur le coin d'actionnement (25) lorsque celui-ci réalise son mouvement de réglage (36).

12. Valve d'étranglement selon l'une des revendications 1 à 11, **caractérisée en ce que** le volet à membrane (16) est réalisé de manière élastique en flexion pour garantir sa possibilité de pivotement.

13. Valve d'étranglement selon la revendication 12, **caractérisée en ce que** le volet à membrane (16) présente un corps de membrane (52) se composant de matériau plat élastique en flexion.

14. Valve d'étranglement selon la revendication 13, **caractérisée en ce que** le corps de membrane se compose de matériau ayant les propriétés élastiques du caoutchouc.

15. Valve d'étranglement selon la revendication 13 ou 14, **caractérisée en ce que** le corps de membrane (52) est pourvu d'au moins un élément de renforcement (48) s'étendant transversalement à la direction du mouvement de réglage (36).

16. Valve d'étranglement selon l'une des revendications 1 à 15, **caractérisée en ce que** le volet à membrane (16), exceptée sa section de fixation (22) arrière, est libre par rapport au boîtier de valve (2), de sorte que le fluide se trouvant dans la chambre de valve (4) puisse s'écouler dessous dans l'état décollé du débouché de canal d'évacuation (7) aussi bien à l'avant que latéralement.

17. Valve d'étranglement selon l'une des revendications 1 à 16, **caractérisée en ce que** le volet à membrane (16) est fixé de manière solidaire du boîtier dans ses deux sections de bord (19) latérales s'étendant entre la section de fixation (22) arrière et le côté avant de volet (18) opposé, par le biais d'une section de paroi (53) flexible se déformant en conséquence lors du pivotement du volet à membrane (16).

18. Valve d'étranglement selon la revendication 17, **caractérisée en ce que** la section de paroi flexible (53) peut être pliée lors du pivotement du volet à membrane (16).

19. Valve d'étranglement selon l'une des revendications 1 à 18, **caractérisée en ce que** le coin d'actionnement (25) est structuré et disposé de sorte qu'il puisse passer lors de son mouvement de réglage (36) devant le débouché de canal d'évacuation (7) sans recouvrir celui-ci.

20. Valve d'étranglement selon l'une des revendications 1 à 19, **caractérisée en ce qu'**elle est équipée d'un dispositif d'entraînement (34) agissant sur le coin d'actionnement (25), suscitant son mouvement de réglage (36), en particulier un dispositif d'entraînement linéaire.

21. Valve d'étranglement selon la revendication 20, **caractérisée en ce que** le dispositif d'entraînement (34) est un dispositif d'entraînement électrique, par exemple un dispositif d'entraînement piézoélectrique ou un dispositif d'entraînement à broche.

22. Valve d'étranglement selon la revendication 20 ou 21, **caractérisée en ce que** le dispositif d'entraînement (34) est disposé en direction du mouvement de réglage (36) sur le côté arrière opposé au volet à membrane (16) du coin d'actionnement (25), se trouvant en particulier avec le coin d'actionnement (25) et le volet à membrane (16) dans un plan commun.

23. Valve d'étranglement selon l'une des revendications 20 à 22, **caractérisée en ce que** le dispositif d'entraînement (34) est logé encapsulé vers l'environnement dans une chambre réceptrice (35) du boîtier de valve (2).

24. Valve d'étranglement selon la revendication 23, **caractérisée en ce que** la chambre de valve (4) et la chambre réceptrice (35) sont reliées entre elles et formées ensemble par un espace intérieur de boîtier (3) du boîtier de valve (2).

25. Valve d'étranglement selon l'une des revendications 20 à 24, **caractérisée en ce qu'**elle est équipée d'au moins une interface de communication (54) pour la communication de signal câblée et/ou sans fil avec un dispositif externe.

26. Valve d'étranglement selon l'une des revendications 1 à 25, **caractérisée par** des moyens de détection de position (55, 56) et/ou des moyens d'affichage de position (57, 58) pour la détection et/ou l'affichage de la position de réglage du coin d'actionnement (25) et/ou de la position de pivotement du volet à membrane (16).

27. Valve d'étranglement selon l'une des revendications 1 à 26, **caractérisée en ce qu'**à l'opposé du dessus du volet à membrane (16), des moyens de butée (38) délimitant sa course de pivotement sont présents, lesquels se composent en particulier d'au moins une saillie de boîtier (38a) dépassant dans la chambre de valve (4).

28. Valve d'étranglement selon l'une des revendications 1 à 27, **caractérisée en ce que** le débouché de canal d'admission (5) et le débouché de canal d'évacuation (7) sont disposés en angle l'un par rapport à l'autre ou sont opposés coaxialement.

29. Valve d'étranglement selon l'une des revendications 1 à 28, **caractérisée en ce que** sur le boîtier de valve (2) est formée une tubulure (13) traversée par le canal d'évacuation (8), qui permet la fixation de la valve d'étranglement sur un appareil fluidique (12).

30. Valve d'étranglement selon l'une des revendications 1 à 29, **caractérisée en ce qu'**au moins un élément d'arrêt (37) dépassant vers le volet à membrane (16) dans la chambre de valve (4) est présent à côté du débouché de canal d'évacuation (7), lequel prescrit une distance minimale entre le volet à membrane (16) et le débouché de canal d'évacuation (7).

31. Valve d'étranglement selon l'une des revendications 1 à 30, **caractérisée en ce que** le volet à membrane (16) est réalisé pivotant de sorte à se décoller du coin d'actionnement (25) lorsque dans le canal d'évacuation (8) règne une pression de fluide supérieure à celle du canal d'admission (6).
